# EUROPÄISCHE PATENTSCHRIFT

(11) **EP 4 515 111 B1**
(45) Veröffentlichungstag und Bekanntmachung des Hinweises auf die Patenterteilung: **18.03.2026**
(21) Anmeldenummer: 23721334.3
(22) Anmeldetag: 20.04.2023
(51) Int. Cl.: F16B 2/18

(54) **HALTEVORRICHTUNG UND HALTERUNGSSET FÜR WERBETRÄGERSYSTEME**
HOLDING DEVICE AND HOLDING SET FOR ADVERTISING MEDIUM SYSTEMS
DISPOSITIF DE MAINTIEN ET ENSEMBLE DE MAINTIEN POUR SYSTÈMES DE SUPPORT PUBLICITAIRE

(30) Priorität: 25.04.2022 DE 102022109872
(43) Veröffentlichungstag der Anmeldung: 05.03.2025
(73) Patentinhaber: Küster, Ralph, 91091 Großenseebach (DE)
(72) Erfinder: Küster, Ralph, 91091 Großenseebach (DE)
(74) Vertreter: Meyer, Rudolf
(86) Internationale Anmeldenummer: PCT/EP2023/060270
(87) Internationale Veröffentlichungsnummer: WO 2023/208713

(56) Entgegenhaltungen:
- DE-U1- 202020 100 478

## Beschreibung

Die Erfindung betrifft eine Haltevorrichtung, welche an einem typischerweise vertikal ausgerichteten Stab eines Werbeträgersystems befestigbar ist. Werbeträgersysteme können hierbei zum Beispiel in Form von Roll-ups, Drop-Flags, Beach-Flags, Square-Flags, sogenannten Kundenstoppern oder Messewandsystemen vorliegen. Ferner betrifft die Erfindung ein Halterungsset, das heißt Baukastensystem, welches verschiedene Komponenten, insbesondere Haltevorrichtungen, für Werbeträger umfasst.

Die DE 20 2020 100 478 U1 offenbart ein Rollup-System und eine Haltevorrichtung. Die Haltevorrichtung ist zur Befestigung an einem Mast, das heißt einem vertikalen Stab, vorgesehen und arbeitet mit elastisch aufweitbaren Elementen. Mit der Haltevorrichtung nach der DE 20 2020 100 478 U1 können verschiedene Gegenstände an Rollup-Systemen prinzipiell bekannter Bauart befestigt werden.

Verschiedene Präsentationseinrichtungen, die Scherenmechaniken aufweisen, sind zum Beispiel in den Dokumenten DE 10 2015 117 480 A1 und EP 1 779 750 B1 beschrieben. In diesen Fällen dienen die Scherenmechaniken dazu, Flächen aus textilem Material zu spannen. Eine Präsentationseinrichtung mit teleskopartig ausziehbaren Elementen ist zum Beispiel aus der DE 299 11 701 U1 bekannt.

Der Erfindung liegt die Aufgabe zu Grunde, Haltevorrichtungen für Rollup- und Flagsysteme gegenüber dem genannten Stand der Technik weiterzuentwickeln, wobei bei praxisgerechter Funktionalität ein besonders günstiges Verhältnis zwischen mechanischer Belastbarkeit, einfacher Handhabbarkeit und multipler Funktionalität angestrebt wird.

Diese Aufgabe wird erfindungsgemäß gelöst durch eine Haltevorrichtung mit den Merkmalen des Anspruchs 1. Die anmeldungsgemäße Haltevorrichtung ist insbesondere zur Verwendung in einem Halterungsset gemäß Anspruch 9 geeignet.

Die Haltevorrichtung ist bei Rollup-, Flag-, sowie sonstigen Präsentationssystemen, beispielsweise Messe-Aufstellsystemen, zur Anbringung an einem typischerweise vertikalen oder leicht geneigten Stab vorgesehen und umfasst ein Paar an spiegelbildlich zueinander an den Stab anzusetzende Halbschalen. Der Stab wird, sofern er vertikal ausgerichtet ist, allgemein auch als Mast bezeichnet. Weiter ist der Haltevorrichtung ein Schnellspannverschluss zum Verbinden der beiden Halbschalen und gleichzeitigen klemmenden Fixieren der Halbschalen am Stab zuzurechnen. Durch die Halbschalen sind zwei Paare an miteinander fluchtenden, horizontal ausgerichteten, auf derselben Seite des Stabes übereinander angeordneten Öffnungen gebildet. Die horizontale Ausrichtung gilt ebenso wie die übereinander angeordnete Platzierung der Öffnungen für Fälle, in denen der Stab vertikal ausgerichtet ist. Allgemein ist jedes Paar an miteinander fluchtenden Öffnungen orthogonal zum Stab ausgerichtet, wobei das erste Paar an Öffnungen gegenüber dem zweiten Paar an Öffnungen in Längsrichtung des Stabes versetzt ist.

Die beiden allgemein als Halbschalen bezeichneten Elemente können jeweils ein- oder mehrteilig aufgebaut und auf verschiedenste Arten geformt sein. Rinnenartige Abschnitte der Halbschalen sind zum Umgreifen des Stabes, bei welchem es sich insbesondere um eine vertikal ausgerichtete Stange eines Roll-ups oder eines Flag-Systems handeln kann, vorgesehen. Die Halbschalen und der Schnellspannverschluss können derart ausgelegt sein, dass sie für die Verwendung bei unterschiedlich dimensionierten Stäben geeignet sind.

Als Material zur Herstellung der Halbschalen kommt insbesondere Kunststoff in Betracht. Alternativ können die Halbschalen aus Metall, insbesondere in Form von Gussteilen, Sinterteilen oder 3D-Druckteilen, hergestellt sein. Auch eine spanabhebende Herstellung oder teilweise spanende Bearbeitung der Halbschalen ist möglich.

Unabhängig vom Werkstoff sowie von der Fertigungstechnologie können die beiden Halbschalen ineinandergreifende Führungselemente, beispielsweise in Form von Zapfen und Bohrungen, aufweisen, die die korrekte Ausrichtung der Halbschalen zueinander beim Zusammensetzen und Ansetzen an den Stab sicherstellen. Dies gilt sowohl für Ausführungsformen, in denen beide Halbschalen als Gleichteile ausgebildet sind, als auch für Ausführungsformen, in denen die zwei Halbschalen unterschiedlich geformt sind.

Beispielsweise sind Führungselemente in Form von ringförmigen Vor- und Rücksprüngen vorhanden, welche an den Rändern der miteinander fluchtenden, typischerweise horizontal ausgerichteten Öffnungen ausgebildet sind. Zusätzlich oder alternativ können miteinander korrespondierende Vor- und Rücksprünge existieren, welche von den miteinander fluchtenden, in der Regel horizontal ausgerichteten Öffnungen der Halbschalen beabstandet sind.

Eine besondere Praxisrelevanz gegenüber nicht beanspruchten Halterungen hat der Schnellspannverschluss, der zum Festklemmen der Halbschalen am Stab vorgesehen ist. Der Aufbau eines solchen Schnellspannverschlusses ist unter anderem aus der Fahrradtechnik bekannt.

Zwischen die beiden Halbschalen kann ein Federelement gespannt sein. Ein solches Federelement kann insbesondere in Form einer Schraubenfeder vorliegen, welche einen Bolzen des Schnellspannverschlusses umgibt.

Das anmeldungsgemäße Halterungsset umfasst allgemein eine gemäß Anspruch 1 ausgebildete Haltevorrichtung nach sowie mindestens ein an dieser Haltevorrichtung befestigbares, im einfachsten Fall stabförmiges Ansatzelement. Zum Fixieren der Ansatzelemente können insbesondere Klemmschrauben, das heißt Feststellschrauben, vorgesehen sein, welche in Gewindebohrungen einschraubbar sind, die sich in den Halbschalen befinden und in Querrichtung der miteinander fluchtenden Öffnungen der Halbschalen ausgerichtet sind. Hierbei können sich in jeder Halbschale mehrere Gewindebohrungen befinden.

Ein Ansatzelement kann jedoch auch auf Konturen der Halbschalen formschlüssig aufsetzbar sein, wobei in einem solchen Fall keine gesonderten Fixierungsmittel benötigt werden. Ein solches aufsteckbares Ansatzelement kann entweder selbst, ohne jegliche zusätzliche Elemente, eine gewünschte Funktion erfüllen, beispielsweise eine Beschriftung und/oder ein Dekor tragen, oder mittels einer geeigneten, werkzeuglos herstell- und lösbaren Verbindung, beispielsweise Klettverbindung, mit zusätzlichen Funktionselementen, welche allgemein als Zubehörteile bezeichnet werden, mechanisch koppelbar sein.

Gemäß einer möglichen Ausgestaltung sind als Ansatzelemente eine Mehrzahl an unterschiedlich langen oder gleich langen, an der Haltevorrichtung befestigbaren Querstäben vorgesehen. Die Stabilität der Anordnung aus Haltevorrichtung und Querstäben wird optional durch zwischen die beiden Querstäbe eingesetzte Abstandshalter verbessert. Optional erfüllen die Abstandshalter zugleich die Funktion von Trägerplatten, an welchen Zubehörteile befestigbar sind. Eine solche Trägerplatte kann nur an zwei übereinander angeordneten Querstäben befestigt werden und ist zum Beispiel als Befestigungsfläche für ein handelsübliches Montage-Klebeband, wie es unter der Bezeichnung Dual-Lock Klettband erhältlich ist, verwendbar.

Verschiedene Abstandhalter unterschiedlicher Komplexität können beispielsweise entweder ein einfaches streifenförmiges, in sich weitestgehend starres Element aufweisen, welches die Distanz zwischen den beiden Querstäben überbrückt, oder - in stabilerer Ausführung - eine die beiden Querstäbe umschließende Rahmenform beschreiben. In allen Fällen können Anschlagelemente, sogenannte Endstopper, existieren, welche auf die Enden der Querstäbe aufsetzbar sind und die Abstandhalter oder sonstigen Elemente, welche an die Querstäbe angesetzt sind, zumindest in einer Richtung gegen Verschieben sichern. Auch die Endstopper können, an den Stirnseiten der Querstäbe, Flächen für die Verbindung mit weiteren Elementen, insbesondere per Klettverschluss, bereitstellen.

Eine mögliche Weiterbildung sieht vor, dass an der Haltevorrichtung mindestens ein Ansatzelement befestigt wird, welches mittels einer Scherenmechanik verstellbar ist. Ebenso können Ansatzelemente verwendet werden, welche teleskopisch verstellbar sind.

Ferner ist die Möglichkeit gegeben, durch mindestens ein schräggestellt zwischen das Ansatzelement einerseits und die Haltevorrichtung oder den vertikalen Stab andererseits eingesetztes Stützelement die mechanische Belastbarkeit zu verbessern. Hierbei kann das schräggestellte Stützelement als Teil einer Regenschirmmechanik gelenkig mit dem Ansatzelement gekoppelt sein.

Die Haltevorrichtung ist auch für überbreite Rollup-Systeme mit zwei Stützrohren, für beidseitig bespannte Rollup-Systeme, für Drop-/Square-/Beach-Flags, für Kundenstopper, auch mit beweglichen, insbesondere vom Wind angetriebenen Teilen, sowie für Messewandsysteme mit dünneren und dickeren Rohren geeignet.

Zur Anpassung der Haltevorrichtung an verschiedene Stabdurchmesser kann ein zwischen die Halbschalen einsetzbarer, zur Anpassung an unterschiedliche Stabdurchmesser geeigneter Adapter existieren. Dieser Adapter beschreibt eine Zange mit einseitiger Hebelwirkung und ist aus zwei einander spiegelbildlich gegenüberliegenden, jeweils mehrfach gekrümmten Hebelarmen gebildet, wobei jeder Hebelarm einen inneren, kreisbogenförmig gekrümmten Hebelabschnitt sowie einen äußeren, ebenfalls kreisbogenförmig gekrümmten, jedoch einen größeren Krümmungsradius aufweisenden Hebelabschnitt umfasst. Eine gelenkige Verbindung ist zwischen den beiden inneren Hebelabschnitten gebildet, wobei die inneren Hebelabschnitte zum Einsetzen zwischen die Halbschalen und die äußeren Hebelabschnitte zum Ansetzen an den Stab vorgesehen sind.

Nachfolgend werden mehrere Ausführungsbeispiele der Erfindung anhand einer Zeichnung näher erläutert. Hierin zeigen:
- Fig. 1: ausschnittsweise ein Rollup- und Flag-System in einer ersten perspektivischen Ansicht,
- Fig. 2: das Rollup- und Flag-System nach Fig. 1 in einer zweiten perspektivischen Ansicht,
- Fig. 3: Halbschalen einer auch für ein Flag-System geeigneten Haltevorrichtung des Rollup-Systems nach Fig. 1 in perspektivischer Ansicht,
- Fig. 4: die Halbschalen in Draufsicht,
- Fig. 5: die Halbschalen in Seitenansicht,
- Fig. 6: eine Anordnung aus einer der beiden Halbschalen, einem Schnellspannverschluss sowie zwei Feststellschrauben,
- Fig. 7: eine zwei Halbschalen umfassende Haltevorrichtung eines Rollup- und Flag-Systems in perspektivischer Ansicht,
- Fig. 8: die Haltevorrichtung nach Fig. 7 in Seitenansicht

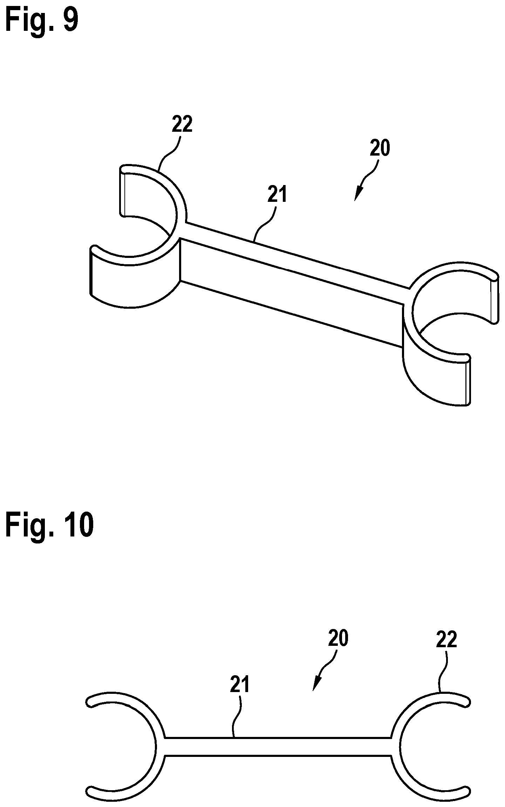

- Fig. 9: einen in der Anordnung nach Fig. 1 verwendeten Abstandshalter in perspektivischer Ansicht,
- Fig. 10: den Abstandshalter nach Fig. 9 in Draufsicht,

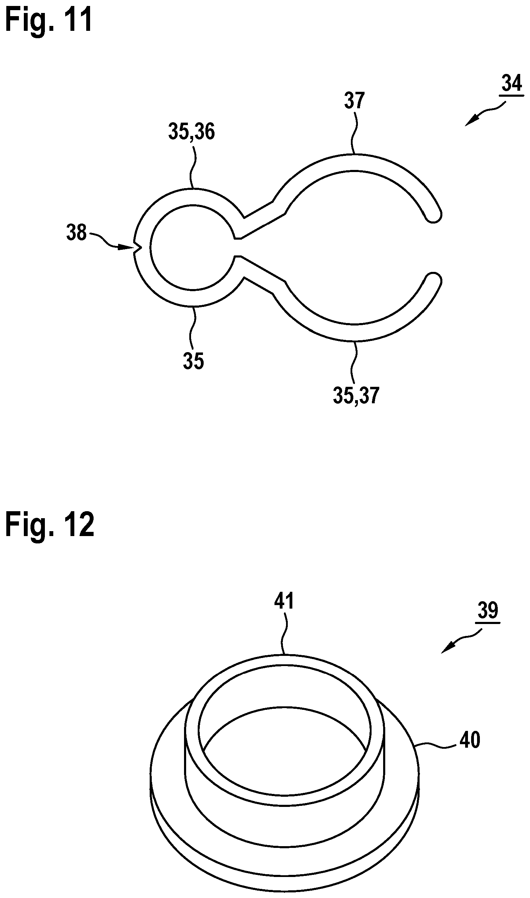

- Fig. 11: einen Adapter für eine Haltevorrichtung,
- Fig. 12: einen Endstopper für ein Rollup- und Flag-System,
- Fig. 13: eine alternative Ausführungsform eines Abstandshalters mit doppelseitiger Trägerplatte für Klebe- und Klettverschlusssysteme in stirnseitiger Ansicht,
- Fig. 14: den Träger-Abstandshalter nach Fig. 13 in perspektivischer Ansicht,
- Fig. 15: eine gegenüber der Variante nach Fig. 9 und 10 modifizierten, einseitigen Abstandshalter in stirnseitiger Ansicht,
- Fig. 16: den Abstandshalter nach Fig. 15 in perspektivischer Ansicht,

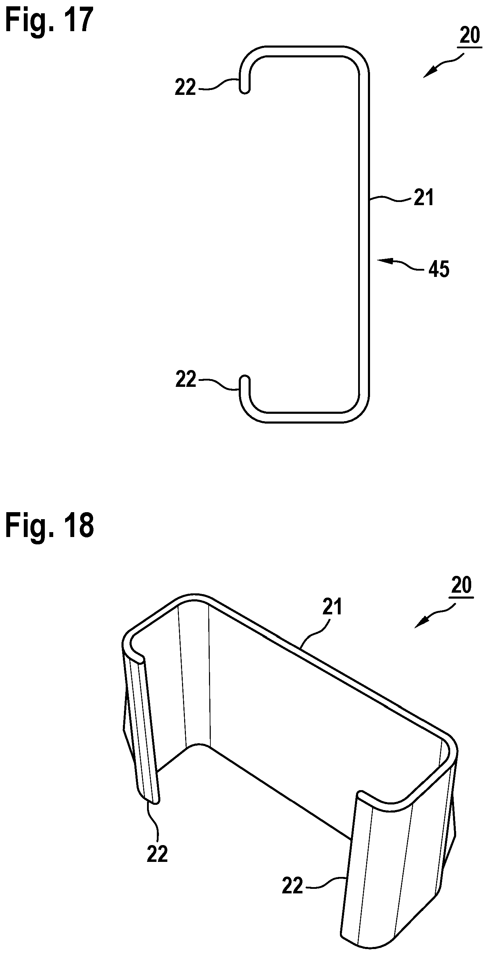

- Fig. 17: eine direkt auf die Haltevorrichtung klipp- oder schiebbare Trägerplatte in stirnseitiger Ansicht,
- Fig. 18: die Trägerplatte nach Fig. 17 in perspektivischer Ansicht,

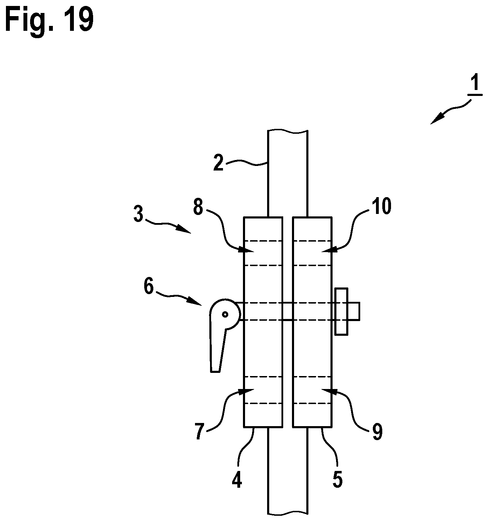

- Fig. 19: ein weiteres Ausführungsbeispiel eines Rollup- und Flag-Systems mit einer zwei Halbschalen sowie einen Schnellspannverschluss aufweisenden Haltevorrichtung,
- Fig. 20: die Haltevorrichtung nach Fig. 19 mit einem eine Scherenmechanik aufweisenden Anbauteil,
- Fig. 21: die Haltevorrichtung nach Fig. 19 mit einem teleskopartig ausziehbaren Anbauteil,
- Fig. 22: die Haltevorrichtung nach Fig. 19 mit einer angebauten Regenschirmmechanik,
- Fig. 23 - 26: verschiedene Ausgestaltungen eines als Rollup-Systems ausgebildeten Werbeträgersystems, jeweils in perspektivischer Ansicht,
- Fig. 27 - 30: verschiedene Ausgestaltungen eines als Flag-Systems ausgebildeten Werbeträgersystems, jeweils in perspektivischer Ansicht.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Ein Rollup-System 1 ist insbesondere zum Spannen einer bedruckten Textilbahn nutzbar. Hinsichtlich des prinzipiellen Aufbaus eines solchen Rollup-Systems wird auf das bereits erwähnte Dokument DE 20 2020 100 478 U1 hingewiesen.

An einem Mast 2, das heißt vertikalen Stab des Rollup-Systems 1, kann eine Haltevorrichtung 3 angebracht werden, welche zwei Halbschalen 4, 5 umfasst, die mittels eines Schnellspannverschlusses 6 klemmend am Mast 2 befestigbar sind. In der ersten Halbschale 4 befinden sich zwei Öffnungen 7, 8; in der zweiten Halbschale 5 zwei Öffnungen 9, 10. Bei montierter Haltevorrichtung 3 fluchten die beiden Öffnungen 7, 9 miteinander. In entsprechender Weise haben auch die beiden Öffnungen 8, 10 eine gemeinsame Mittelachse, welche horizontal ausgerichtet ist. Um die beiden Halbschalen 4, 5 bei der Montage der Haltevorrichtung 3 zwangsweise korrekt auszurichten, schließt an eine der Öffnungen 7, 8 der ersten Halbschale 4 ein ringförmiger Vorsprung 13 an, während die andere Öffnung 8, 7 derselben Halbschale 4 mit einer ringförmigen Ausnehmung 14 abschließt. Entsprechendes gilt für die zweite Halbschale 5, so dass beim Zusammensetzen der Halbschalen 4, 5 jeweils ein Vorsprung 13 in eine Ausnehmung 14 eingreift. In den Ausführungsbeispielen sind die Halbschalen 4, 5 als Gleichteile ausgebildet. Durch die Halbschalen 4, 5 ausgebildete Rinnen, welche sich im zusammengebauten Zustand des Rollup-Systems 1 an den Mast 2 schmiegen, sind mit 11, 12 bezeichnet. Ferner weist die Halbschale 4, 5 eine Bohrung 15 für den Schnellspannverschluss 6 auf.

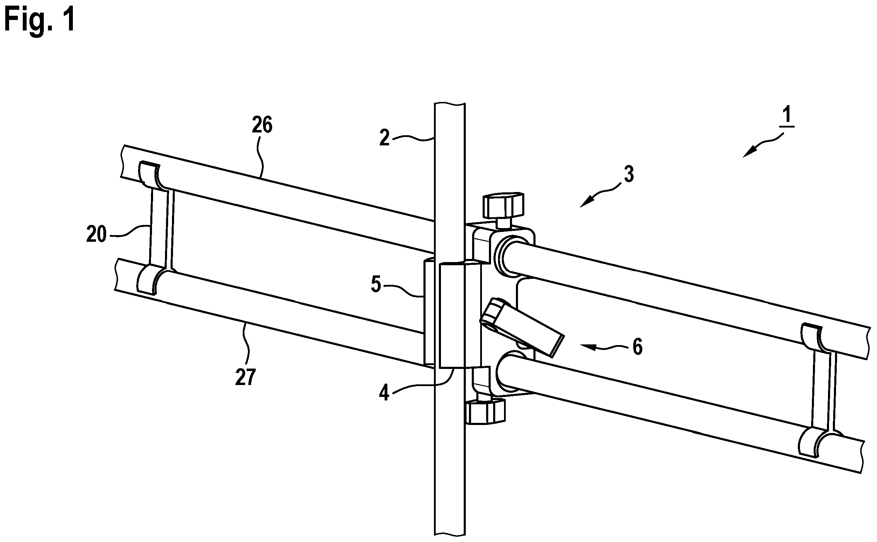

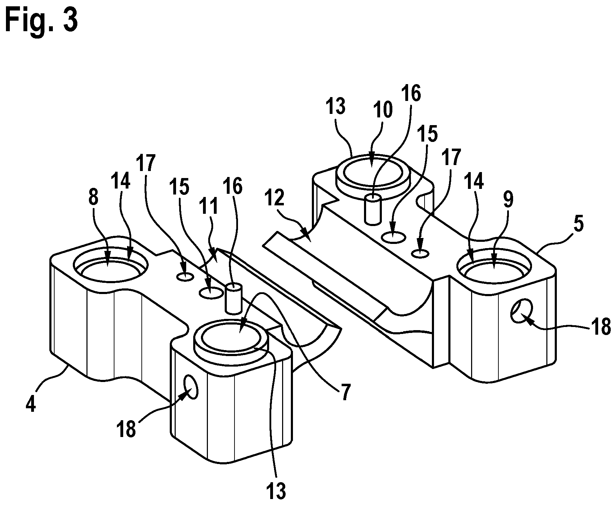

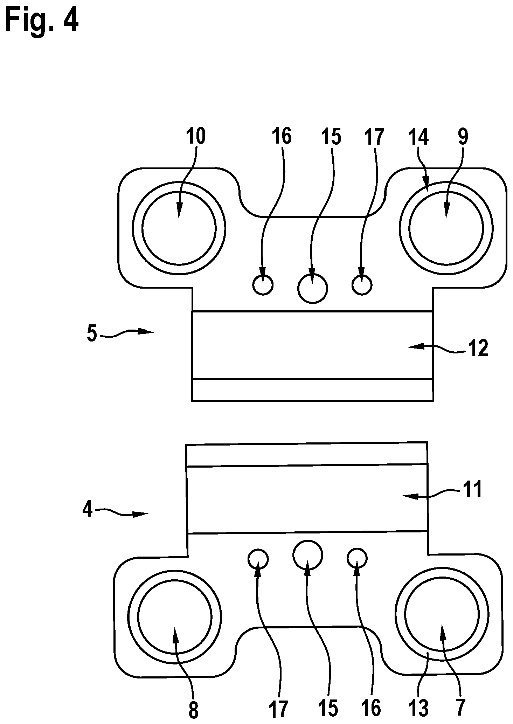

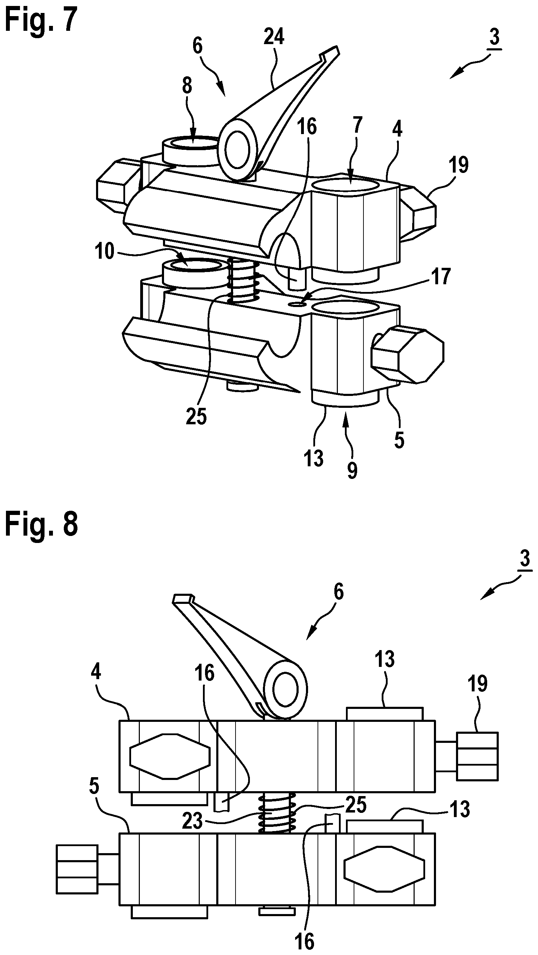

Im Ausführungsbeispiel nach den Fig. 1 bis 8 weist jede Halbschale 4, 5 zusätzlich einen bolzenförmigen Vorsprung 16 auf, der in eine Sacklochbohrung 17 der anderen Halbschale 5, 4 einsteckbar ist. Im Vergleich zu den ringförmigen Vorsprüngen 13 ragen die bolzenförmigen Vorsprünge 16 weiter aus den Halbschalen 4, 5 heraus. Was den Schnellspannverschluss 6 betrifft, wird auf die Fig. 8 verweisen. Die hierin erkennbare Form des Schnellspannverschlusses 6 ist für sämtliche Ausführungsbeispiele geeignet. Komponenten des Schnellspannverschlusses 6 sind ein Bolzen 23, welcher durch die Bohrungen 15 der Halbschalen 4, 5 gesteckt ist, sowie ein Schwenkhebel 24 mit einer Exzenterkontur. Ein als Schraubenfeder ausgebildetes Federelement 25 umgibt den Bolzen 23 und übt auf die Halbschalen 4, 5 eine abstoßende Kraft aus.

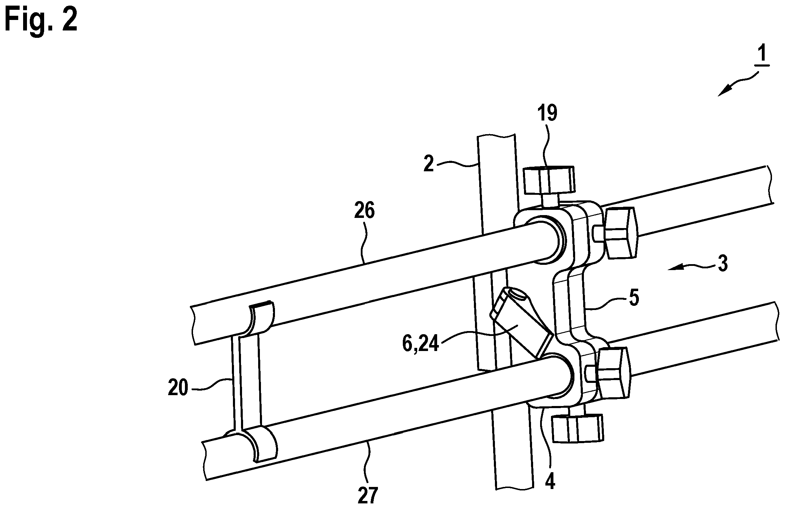

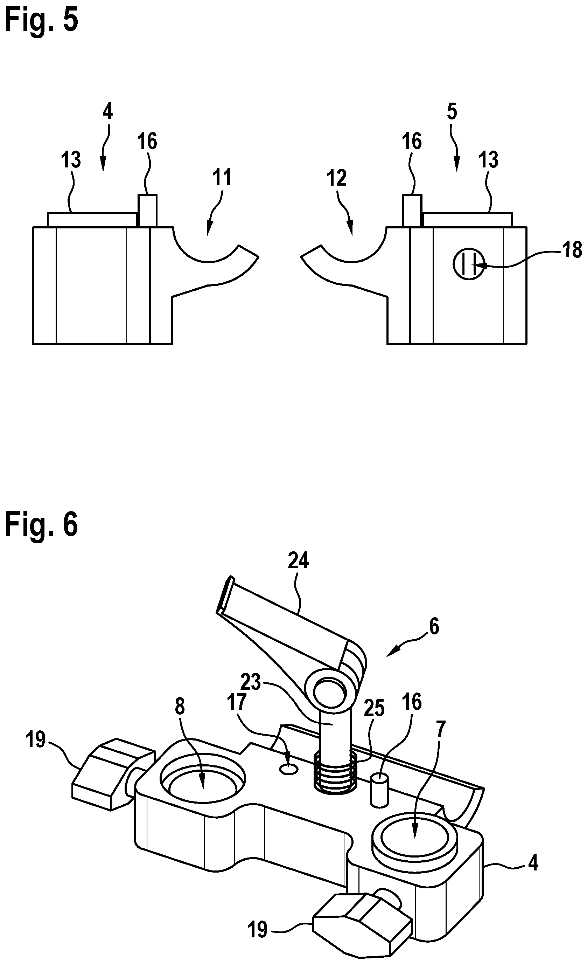

Mit Hilfe der Öffnungen 7, 8, 9, 10 der Halbschalen 4, 5 ist die Haltevorrichtung 3 in der Lage, verschiedene Ansatzelemente 26, 27, 28, 30 zu halten. In der Konfiguration nach den Fig. 1 und 2 trägt die Haltevorrichtung 3 einen oberen Querstab 26 und einen unteren Querstab 27 als Ansatzelemente 26, 27. In nicht dargestellter Weise kann der obere Querstab 26 länger als der untere Querstab 27 sein. Ebenso können beide Querstäbe 26, 27 gleich lang sein. Zwischen die Querstäbe 26, 27 ist auf jeder Seite des Stabs 2 ein Abstandshalter 20 eingesetzt, welcher der Erhöhung der Stabilität dient und im Detail in den Figuren 5 und 6 dargestellt ist. Beim Abstandshalter 20 handelt es sich um ein einstückiges Kunststoffteil mit einem leistenförmigen Mittelabschnitt 21 und zwei federnden, maulförmigen Endabschnitten 22, die jeweils auf einen der Querstäbe 26, 27 aufschnappbar sind. Zur Fixierung der Querstäbe 26, 27 sind Feststellschrauben 19 vorgesehen, die in Gewindebohrungen 18 der Halbschalen 4, 5 einschraubbar sind.

Die in den Figuren 1 und 2 erkennbare Konstruktion mit den beiden Querstäben 26, 27 eignet sich unter anderem für die Montage von sogenannten Tablet-Haltersystemen am Querstab 26. An einem solchen Haltersystem können zum Beispiel Tablets, Bildschirme oder sonstige Werbemedien befestigt werden. Um eine Verdrehung und Rotation der Ansatzelemente 26, 27 zu verhindern, kann beidseits der Haltevorrichtung 3 eine nicht dargestellte Lochung in den übereinander liegenden Querstäben 26, 27 ausgeführt werden. Eine Verdrehung der Querstäbe 26, 27 kann durch Einführung eines Stiftes mit Kopfteil in die gelochten Querstäbe 26, 27 verhindert werden.

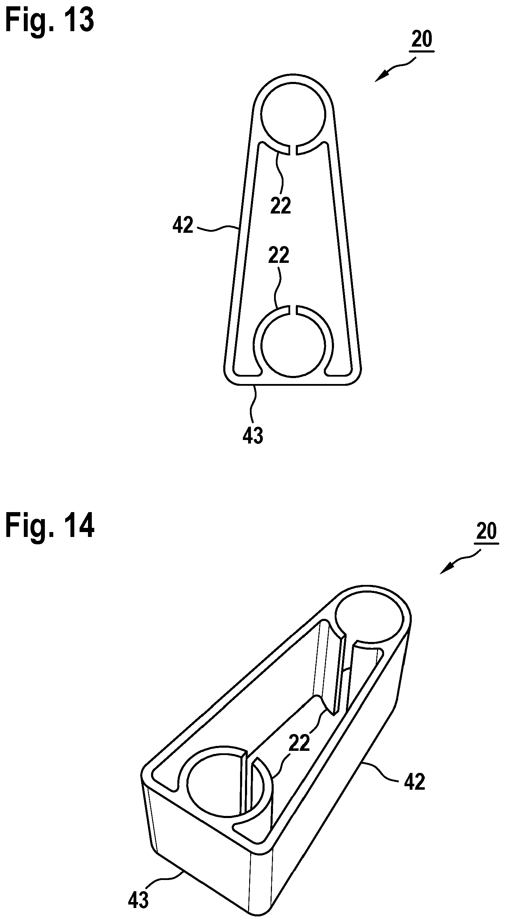

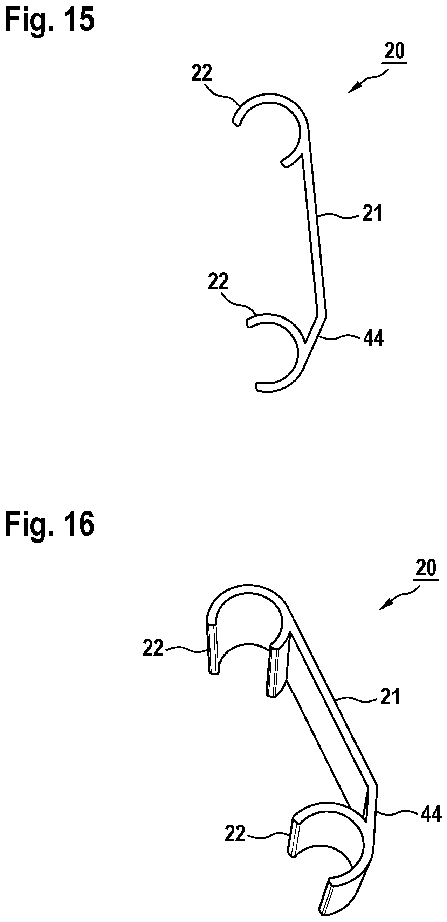

In sämtlichen Ausführungsbeispielen sind die der Montagevereinfachung sowie Stabilisierung dienenden bolzenförmigen Vorsprünge 16 sowie Sacklochbohrungen 17 vorhanden. Zur Installation der Träger-Abstandshalter 20, welche in den Fällen der Figuren 13 bis 16 vorliegen, ist die Verwendung gleich langer Querstäbe 26, 27, welche in die Öffnungen 7, 8, 9, 10 einzustecken sind, vorgesehen. Damit wird eine Unterkonstruktion für die Anbringung der Träger-Abstandshalter 20 bereitgestellt.

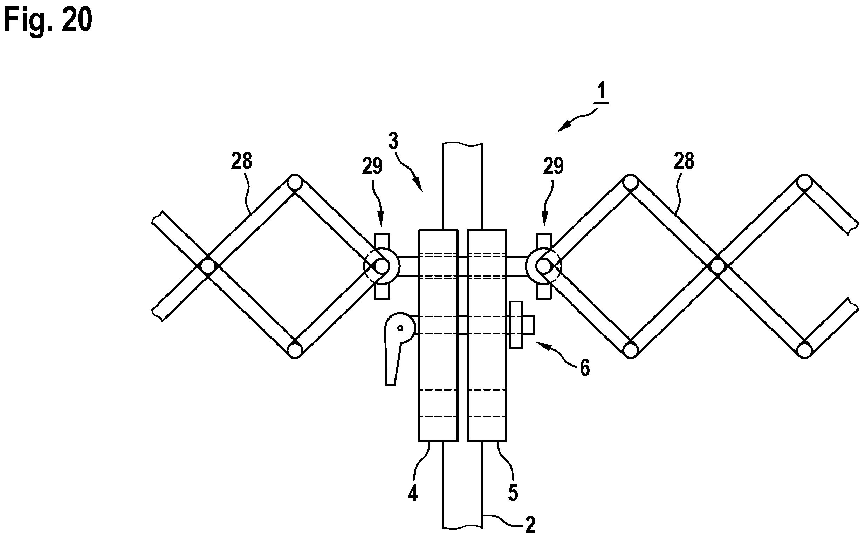

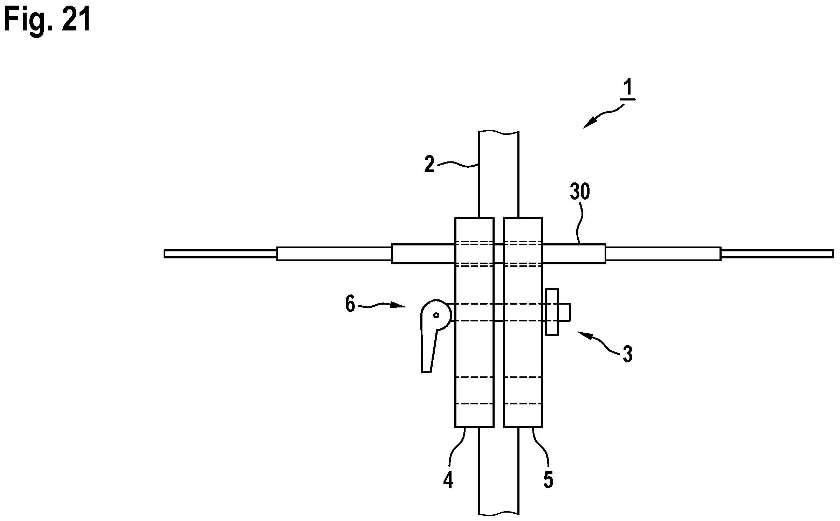

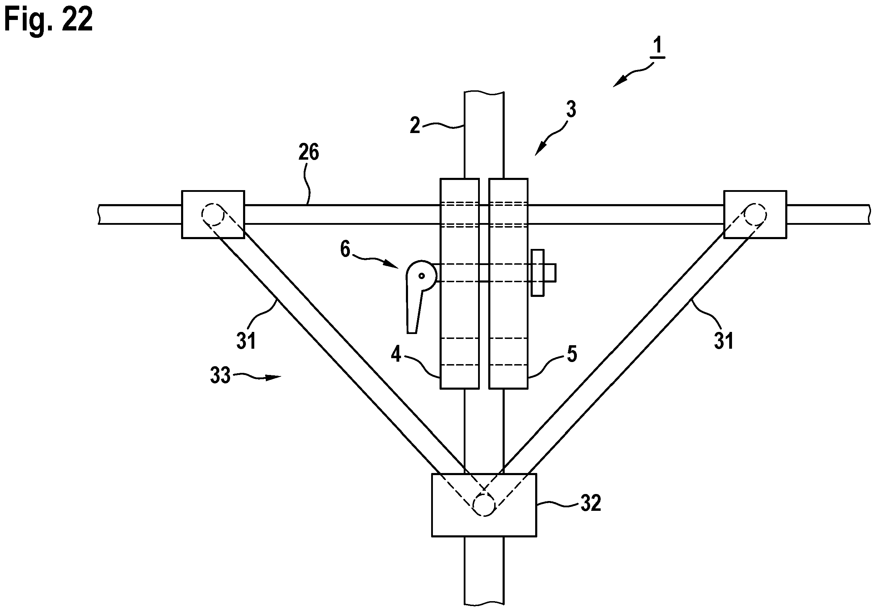

Gemäß Fig. 20 sind an der Haltevorrichtung 3 Ansatzelemente 28 mit Scherenmechanik gehalten. Feststellmechanismen der Scherenmechanik sind mit 29 bezeichnet. Ein in Fig. 21 erkennbares Ansatzelement 30 weist im Unterschied zum Querstab 26 eine Teleskopmechanik auf. Diese mögliche Ausgestaltung bezieht sich auf den Querstab 27. In der in Fig. 22 skizzierten Anordnung ist der Querstab 26 durch zwei schräg gestellte Stützelemente 31 zusätzlich abgestützt. Die Stützelemente 31 sind an einem unteren Halteelement 32 angelenkt, welches sich am Mast 2 befindet. Dank einer Verschiebbarkeit des Halteelementes 32 und einer nicht im Detail dargestellten geteilten Ausbildung des Querstabs 26 ist in diesem Fall insgesamt eine Regenschirmmechanik 33 gebildet.

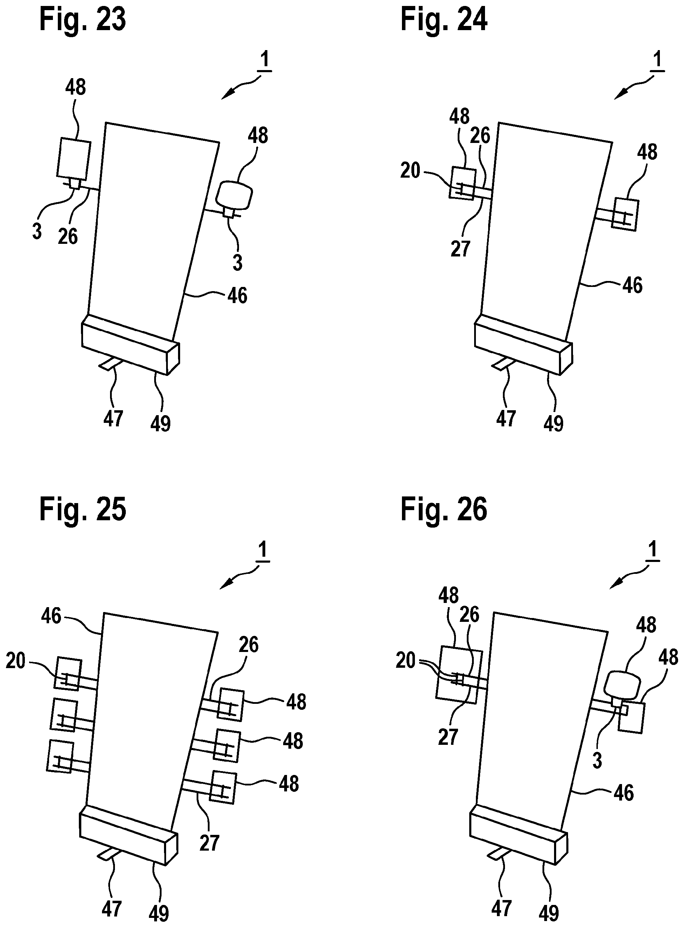

Die Figuren 23 bis 26 zeigen verschiedene Möglichkeiten, ein Rollup-System 1 als WerbeträgerSystem zu nutzen. Hierin sind Zubehörteile, welche in verschiedener Weise mit Hilfe einer geeigneten Anzahl der Haltevorrichtungen 3 über einen Querstab 26 oder eine Mehrzahl an Querstäben 26, 27 am Mast 2 befestigbar sind, allgemein mit 48 bezeichnet. Die Konfigurationen nach den Figuren 23 bis 26 werden, in der Reihenfolge der Figuren, das heißt von links oben nach rechts unten, als "Multifunktional", "Standard", "Mehrfach" und "Kombi" bezeichnet. In allen Fällen sind die Zubehörteile 48 seitlich neben einer Textilbahn oder Textilfläche 46 des Werbeträger-Systems 1 positioniert. Eine Kassette, welche die Textilbahn 46 aufnehmen kann, ist mit 49, ein Fußstück des Werbeträger-Systems 1 mit 47 bezeichnet.

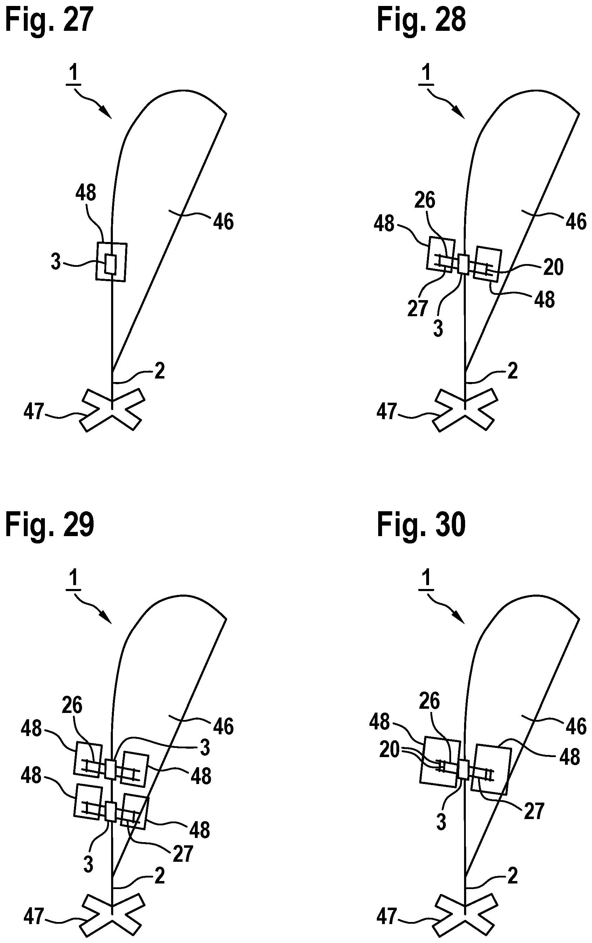

Das Bezugszeichen 47 wird auch in den Figuren 27 bis 30 verwendet, die - ähnlich wie die Figuren 23 bis 26 - verschiedene Möglichkeiten zeigen, ein Flag-System 1 als WerbeträgerSystem zu nutzen. In den Fällen der Figuren 27 bis 30 sind die vier skizzierten Konfigurationen, ebenfalls in aufsteigender der Reihenfolge der Figuren, das heißt von links oben nach rechts unten auf dem betreffenden Zeichnungsblatt, als "Einzelträger", "Doppelträger", "Mehrfach" und "XL" bezeichnet. Bei Anwendung der Haltevorrichtung 3 nach einer der in den Figuren 23 bis 30 dargestellten Konfigurationen gilt ebenso wie in anderen Anwendungsfällen, dass - im Rahmen der gegebenen Platzverhältnisse - eine beliebige Mehrzahl an Haltevorrichtungen 3 übereinander montiert werden können.

### Bezugszeichenliste

- 1: Rollup- und Flagsystem, Werbeträgersystem
- 2: Mast, vertikaler Stab
- 3: Haltevorrichtung
- 4: Halbschale
- 5: Halbschale
- 6: Schnellspannverschluss
- 7: erste Öffnung in der ersten Halbschale
- 8: zweite Öffnung in der ersten Halbschale
- 9: erste Öffnung in der zweiten Halbschale
- 10: zweite Öffnung in der zweiten Halbschale
- 11: Rinne in der ersten Halbschale
- 12: Rinne in der zweiten Halbschale
- 13: ringförmiger Vorsprung
- 14: ringförmige Ausnehmung
- 15: Bohrung für Schnellspannverschluss
- 16: bolzenförmiger Vorsprung
- 17: Sacklochbohrung
- 18: Gewindebohrung
- 19: Feststellschraube
- 20: Abstandshalter, Trägerhalter
- 21: leistenförmiger Mittelabschnitt
- 22: federnder, maulförmiger Endabschnitt, Befestigungsabschnitt
- 23: Bolzen
- 24: Schwenkhebel
- 25: Federelement
- 26: oberer Querstab
- 27: unterer Querstab
- 28: Ansatzelement mit Scherenmechanik
- 29: Feststellmechanismus der Scherenmechanik
- 30: Ansatzelement mit Teleskopmechanik
- 31: Stützelement
- 32: unteres Halteelement
- 33: Regenschirmmechanik
- 34: Adapter
- 35: Hebelarm
- 36: innerer Hebelabschnitt
- 37: äußerer Hebelabschnitt
- 38: gelenkige Verbindung
- 39: Endstopper
- 40: Scheibe
- 41: Rohransatz
- 42: Rahmen
- 43: Fußabschnitt
- 44: Übergangsabschnitt
- 45: Ansatzfläche
- 46: Textilbahn/-fläche
- 47: Fußstück
- 48: Zubehörteil
- 49: Kassette

## Patentansprüche

1. Haltevorrichtung (3) zur Anbringung an einem Stab (2), mit einem Paar an spiegelbildlich zueinander an den Stab (2) anzusetzenden Halbschalen (4, 5), sowie mit einem Schnellspannverschluss (6) zum Verbinden der beiden Halbschalen (4, 5) und gleichzeitigen klemmenden Fixieren der Halbschalen (4, 5) am Stab (2), wobei durch die Halbschalen (4, 5) zwei Paare an miteinander fluchtenden, orthogonal zum Stab (2) ausgerichteten, auf derselben Seite des Stabes (2) angeordneten Öffnungen (7, 8, 9, 10) gebildet sind, wobei das erste Paar an Öffnungen (7, 9) gegenüber dem zweiten Paar an Öffnungen (8, 10) in Längsrichtung des Stabes (2) versetzt ist.

2. Haltevorrichtung (3) nach Anspruch 1, **dadurch gekennzeichnet, dass** die beiden Halbschalen (4, 5) identisch geformt sind.

3. Haltevorrichtung (3) nach Anspruch 1 oder 2, **dadurch gekennzeichnet, dass** die Halbschalen (4, 5) miteinander zusammenwirkende Vor- und Rücksprünge (13, 14, 16, 17) zum Ausrichten der Halbschalen (4, 5) beim Zusammenschieben aufweisen.

4. Haltevorrichtung (3) nach Anspruch 3, **dadurch gekennzeichnet, dass** miteinander korrespondierende Vor- und Rücksprünge (13, 14) an den Rändern der miteinander fluchtenden, bei vertikaler Ausrichtung des Stabes (2) horizontal ausgerichteten Öffnungen (7, 8, 9, 10) ausgebildet sind.

5. Haltevorrichtung (3) nach Anspruch 3 oder 4, **dadurch gekennzeichnet, dass** miteinander korrespondierende Vor- und Rücksprünge (16, 17) existieren, welche von den miteinander fluchtenden, horizontal ausgerichteten Öffnungen (7, 8, 9, 10) beabstandet sind.

6. Haltevorrichtung (3) nach einem der Ansprüche 1 bis 5, **gekennzeichnet durch** ein zwischen die Halbschalen (4, 5) gespanntes Federelement (25).

7. Haltevorrichtung (3) nach Anspruch 6, **dadurch gekennzeichnet, dass** das Federelement (25) als einen Bolzen (23) des Schnellspannverschlusses (6) umgebende Schraubenfeder ausgebildet ist.

8. Haltevorrichtung (3) nach einem der Ansprüche 1 bis 7, **gekennzeichnet durch** in Querrichtung der Öffnungen (7, 8, 9, 10) in die Halbschalen (4, 5) einschraubbare Klemmschrauben (19).

9. Halterungsset, umfassend mindestens eine Haltevorrichtung (3) nach Anspruch 1 sowie mindestens ein an der Haltevorrichtung (3) befestigbares Ansatzelement (26, 27, 28, 30).

10. Halterungsset nach Anspruch 9, **dadurch gekennzeichnet, dass** als Ansatzelemente (26, 27) mehrere, insbesondere unterschiedlich lange, an der Haltevorrichtung (3) befestigbare Querstäbe (26, 27) vorgesehen sind.

11. Halterungsset nach Anspruch 10, **gekennzeichnet durch** mindestens einen zwischen die beiden Querstäbe (26, 27) einsetzbaren Abstandshalter (20).

12. Halterungsset nach Anspruch 11, **gekennzeichnet durch** der Abstandshalter (20) einen leistenförmigen Mittelabschnitt (21) sowie zwei an dessen Enden anschließende, zur Verbindung mit jeweils einem Querstab (26, 27) vorgesehene federnde, maulförmige Endabschnitte (22) aufweist.

13. Halterungsset nach Anspruch 11, **gekennzeichnet durch** der Abstandshalter (20) eine die beiden Querstäbe (26, 27) umschließende Rahmenform beschreibt.

14. Halterungsset nach einem der Ansprüche 9 bis 13, **dadurch gekennzeichnet, dass** ein Ansatzelement (28) existiert, welches mittels einer Scherenmechanik verstellbar ist.

15. Halterungsset nach einem der Ansprüche 9 bis 14, **dadurch gekennzeichnet, dass** das Ansatzelement (30) existiert, welches teleskopisch verstellbar ist.

16. Halterungsset nach einem der Ansprüche 9 bis 15, **gekennzeichnet durch** mindestens ein schräggestellt zwischen das Ansatzelement (26) einerseits und die Haltevorrichtung (3) oder den vertikalen Stab (2) andererseits einzusetzendes Stützelement (31).

17. Halterungsset nach Anspruch 16, **dadurch gekennzeichnet, dass** das Stützelement (31) als Teil einer Regenschirmmechanik (33) gelenkig mit dem Ansatzelement (26) gekoppelt ist.

18. Halterungsset nach einem der Ansprüche 11 bis 17, **dadurch gekennzeichnet, dass** mindestens eines der Elemente Ansatzelement (26, 27, 28, 30) und Abstandshalter (20) zur Verbindung mit einem Zubehörteil (48) mittels einer an dem betreffenden Element (20, 26, 27, 28, 30) befindlichen Klettverbindung ausgebildet ist.

19. Halterungsset nach einem der Ansprüche 9 bis 18, **gekennzeichnet durch** einen zwischen die Halbschalen (4, 5) einsetzbaren, zur Anpassung an unterschiedliche Stabdurchmesser vorgesehenen Adapter (34), welcher eine Zange mit einseitiger Hebelwirkung beschreibt und aus zwei einander spiegelbildlich gegenüberliegenden, jeweils mehrfach gekrümmten Hebelarmen (35) gebildet ist, wobei jeder Hebelarm (35) einen inneren, kreisbogenförmig gekrümmten Hebelabschnitt (36) sowie einen äußeren, ebenfalls kreisbogenförmig gekrümmten, jedoch einen größeren Krümmungsradius aufweisenden Hebelabschnitt (37) umfasst, wobei eine gelenkige Verbindung zwischen den inneren Hebelabschnitten (36) gebildet ist, und wobei die inneren Hebelabschnitte (36) zum Einsetzen zwischen die Halbschalen (4, 5) und die äußeren Hebelabschnitte (37) zum Ansetzen an den Stab (2) vorgesehen sind.

## Claims

1. A holding device (3) for attachment to a rod (2), having a pair of half shells (4, 5) to be attached to the rod (2) as mirror images of each other, as well as having a quick-release locking mechanism (6) for connecting the two half shells (4, 5) and simultaneously fixing the half shells (4, 5) to the rod (2) in a clamping manner, wherein the half shells (4, 5) form two pairs of openings (7, 8, 9, 10) aligned with one another, oriented orthogonally to the rod (2), and arranged on the same side of the rod (2), wherein the first pair of openings (7, 9) is offset in the longitudinal direction of the rod (2) relative to the second pair of openings (8, 10).

2. The holding device (3) according to Claim 1, **characterised in that** the two half shells (4, 5) are identically shaped.

3. The holding device (3) according to Claim 1 or 2, **characterised in that** the half shells (4, 5) have interacting protrusions and recesses (13, 14, 16, 17) for aligning the half shells (4, 5) when they are pushed together.

4. The holdig device (3) according to Claim 3, **characterised in that** corresponding protrusions and recesses (13, 14) are formed on the edges of the openings (7, 8, 9, 10) aligned with one another and oriented horizontally when the rod (2) is vertically oriented.

5. The holding device (3) according to Claim 3 or 4, **characterised in that** corresponding protrusions and recesses (16, 17) exist, which are spaced apart from the openings (7, 8, 9, 10) aligned with one another and oriented horizontally.

6. The holding device (3) according to one of Claims 1 to 5, **characterised by** a spring element (25) tensioned between the half shells (4, 5).

7. The holding device (3) according to Claim 6, **characterised in that** the spring element (25) is designed as a coil spring surrounding a bolt (23) of the quick-release locking mechanism (6).

8. The holding device (3) according to one of Claims 1 to 7, **characterised by** clamping screws (19) which can be screwed into the half shells (4, 5) in the transverse direction of the openings (7, 8, 9, 10).

9. The holding set, comprising at least one holding device (3) according to Claim 1, as well as at least one attachment element (26, 27, 28, 30) that can be attached to the holding device (3).

10. The holding set according to Claim 9, **characterised in that** a plurality of cross-bars (26, 27), in particular with different lengths, and which can be attached to the holding device (3), are provided as attachment elements (26, 27).

11. The holding set according to Claim 10, **characterised by** at least one spacer (20) that can be inserted between the two cross-bars (26, 27).

12. The holding set according to Claim 11, **characterised in that** the spacer (20) has a strip-shaped central section (21) as well as two springy, jaw-shaped end sections (22) adjoining its ends, which are provided for connection to a respective cross-bar (26, 27).

13. The holding set according to Claim 11, **characterised in that** the spacer (20) defines a frame shape surrounding the two cross-bars (26, 27).

14. The holding set according to one of Claims 9 to 13, **characterised in that** an attachment element (28) exists, which can be adjusted by means of scissor mechanism.

15. The holding set according to one of Claims 9 to 14, **characterised in that** the attachment element (30) exists, which is telescopically adjustable.

16. The holding set according to one of Claims 9 to 15, **characterised by** at least one support element (31) to be inserted at an angle between the attachment element (26), on the one hand, and the holding device (3) or the vertical rod (2), on the other.

17. The holding set according to Claim 16, **characterised in that** the support element (31) is coupled in an articulated manner to the attachment element (26) as part of an umbrella mechanism (33).

18. The holding set according to one of Claims 11 to 17, **characterised in that** at least one of the elements, namely the attachment element (26, 27, 28, 30) and spacer (20), is designed for connection to an accessory (48) by means of a Velcro fastening located on the element (20, 26, 27, 28, 30) in question.

19. The holding set according to one of Claims 9 to 18, **characterised by** an adapter (34), which can be inserted between the half shells (4, 5) and is provided to adapt to different rod diameters, and which defines a pair of pliers with a one-sided lever action and is formed from two mirror-image opposing lever arms (35), respectively curved multiple times, wherein each lever arm (35) comprises an inner lever section (36) curved in an arcuate manner and an outer lever section (37) likewise curved in an arcuate manner, but having a larger radius of curvature, wherein an articulated joint is formed between the inner lever sections (36), and wherein the inner lever sections (36) are provided to be inserted between the half shells (4, 5) and the outer lever sections (37) are provided to be attached to the rod (2).

## Revendications

1. Dispositif de maintien (3), destiné à être monté sur une barre (2), pourvu d'une paire de demi-coques (4, 5), qui doivent être appliquées en symétrie spéculaire sur la barre (2), ainsi que d'une fermeture rapide par serrage (6), destinée à assembler les deux demi-coques (4, 5) et à fixer simultanément en les coinçant les deux demi-coques (4, 5) sur la barre (2), par les demi-coques (4, 5) étant créés deux paires d'orifices (7, 8, 9, 10) mutuellement alignés, orientés de manière orthogonale par rapport à la barre (2), placés sur le même côté de la barre (2), la première paire d'orifices (7, 9) étant décalée par rapport à la deuxième paire d'orifices (8, 10) dans la direction longitudinale de la barre (2).

2. Dispositif de maintien (3) selon la revendication 1, **caractérisé en ce que** les deux demi-coques (4, 5) sont façonnées à l'identique.

3. Dispositif de maintien (3) selon la revendication 1 ou 2, **caractérisé en ce que** les demi-coques (4, 5) comportent des saillies et des renfoncements (13, 14, 16, 17) coopérant réciproquement, pour orienter les demi-coques (4, 5) lors de leur rapprochement.

4. Dispositif de maintien (3) selon la revendication 3, **caractérisé en ce que** des saillies et des renfoncements (13, 14) correspondants les uns avec les autres sont conçus sur des bords mutuellement alignés des orifices (7, 8, 9, 10), orientés à l'horizontale lors d'une orientation verticale de la barre (2).

5. Dispositif de maintien (3) selon la revendication 3 ou 4, **caractérisé en ce qu'**il existe des saillies et des renfoncements (16, 17) correspondants les uns avec les autres, lesquels sont écartés par rapport aux orifices (7, 8, 9, 10) mutuellement alignés, orientés à l'horizontale.

6. Dispositif de maintien (3) selon l'une quelconque des revendications 1 à 5, **caractérisé par** un élément à ressort (25), tendu entre les demi-coques (4, 5).

7. Dispositif de maintien (3) selon la revendication 6, **caractérisé en ce que** l'élément à ressort (25) est conçu sous la forme d'un ressort hélicoïdal, entourant un boulon (23) de la fermeture rapide par serrage (6).

8. Dispositif de maintien (3) selon l'une quelconque des revendications 1 à 7, **caractérisé par** des vis de serrage (19), susceptibles d'être vissées dans les demi-coques (4, 5) dans la direction transversale des d'orifices (7, 8, 9, 10).

9. Ensemble de maintien, comprenant au moins un dispositif de maintien (3) selon la revendication 1, ainsi qu'au moins un élément rapporté (26, 27, 28, 30), susceptible d'être fixé sur le dispositif de maintien (3).

10. Ensemble de maintien selon la revendication 9, **caractérisé en ce qu'**en tant qu'éléments rapportés (26, 27) sont prévues plusieurs barres transversales (26, 27), notamment de différentes longueurs, susceptibles d'être fixées sur le dispositif de maintien (3).

11. Ensemble de maintien selon la revendication 10, **caractérisé par** au moins un écarteur (20) insérable entre les deux barres transversales (26, 27).

12. Ensemble de maintien selon la revendication 11, **caractérisé en ce que** l'écarteur (20) comporte un segment médian (21) en forme de baguette, ainsi que deux segments d'extrémité (22) résilients, en forme de bouche, se raccordant sur les extrémités de celui-ci, destinés à être assemblés avec chaque fois une barre transversale (26, 27).

13. Ensemble de maintien selon la revendication 11, **caractérisé en ce que** l'écarteur (20) décrit une forme de cadre entourant les deux barres transversales (26, 27).

14. Ensemble de maintien selon l'une quelconque des revendications 9 à 13, **caractérisé en ce qu'**il existe un élément rapporté (28), lequel est ajustable au moyen d'un mécanisme en ciseaux.

15. Ensemble de maintien selon l'une quelconque des revendications 9 à 14, **caractérisé en ce que** l'élément rapporté (30) existe, lequel est télescopiquement ajustable.

16. Ensemble de maintien selon l'une quelconque des revendications 9 à 15, **caractérisé par** au moins un élément d'appui (31) qui doit être inséré en position oblique entre l'élément rapporté (26) d'une part et le dispositif de maintien (3) ou la barre (2) verticale d'autre part.

17. Ensemble de maintien selon la revendication 16, **caractérisé en ce qu'**en tant que partie d'un mécanisme en parapluie (33), l'élément d'appui (31) est couplé de manière articulée avec l'élément rapporté (26).

18. Ensemble de maintien selon l'une quelconque des revendications 11 à 17, **caractérisé en ce que** pour son assemblage avec une pièce accessoire (48), au moins l'un des éléments, élément rapporté (26, 27, 28, 30) et écarteur (20) est conçu avec une liaison autoagrippante située sur l'élément (20, 26, 27, 28, 30) concerné.

19. Ensemble de maintien selon l'une quelconque des revendications 9 à 18, **caractérisé par** un adaptateur (34), insérable entre les demi-coques (4, 5), prévu pour s'adapter à différents diamètres de barre, lequel décrit une pince à effet de levier sur un côté et qui est constitué de deux bras (35) de levier mutuellement opposés de manière spéculaire, chacun recourbé plusieurs fois, chaque bras (35) de levier comprenant un segment (36) de levier intérieur, recourbé en arc de cercle, ainsi qu'un segment (37) de levier extérieur, également recourbé en arc de cercle, mais présentant pourtant un rayon de courbure plus élevé, un assemblage articulé étant constitué entre les segments (36) de levier intérieurs et les segments (36) de levier intérieurs étant prévus pour être insérés entre les demi-coques (4, 5) et les segments (37) de levier extérieurs étant prévus pour être appliqués contre la barre (2).
